# EUROPEAN PATENT SPECIFICATION

(11) **EP 4 363 731 B1**
(45) Date of publication and mention of the grant of the patent: **05.08.2026**
(21) Application number: 22733759.9
(22) Date of filing: 24.06.2022
(51) Int. Cl.: F16B 7/04, F16B 7/20

(54) **STRUT COMPRISING A CONNECTOR, AND ASSEMBLY OF SUCH A STRUT WITH ONE OF A FURTHER STRUT OR AN ACCESSORY**
STREBE MIT EINEM VERBINDER UND ANORDNUNG EINER SOLCHEN STREBE MIT EINER VON EINER WEITEREN STREBE ODER EINEM ZUBEHÖRTEIL
SUPPORT COMPRENANT UN CONNECTEUR, ET ASSEMBLAGE D'UN TEL SUPPORT AVEC L'UN PARMI UN AUTRE SUPPORT OU UN ACCESSOIRE

(30) Priority: 02.07.2021 NL 2028617
(43) Date of publication of application: 08.05.2024
(73) Proprietor: Holmatro B.V., 4941 VL Raamsdonksveer (NL)
(72) Inventor: BRUURS, Antonius Johannes Henricus, 4941 VL RAAMSDONKSVEER (NL); VAN EINDHOVEN, René Wilhelmus Johannes, 4941 VL RAAMSDONKSVEER (NL); POST, Sebastian, 4941 VL RAAMSDONKSVEER (NL); SCHIPPER, Roelof Richard, 4941 VL RAAMSDONKSVEER (NL); VAN DER VOET, Gijsbert, 4941 VL RAAMSDONKSVEER (NL)
(74) Representative: Arnold & Siedsma
(86) International application number: PCT/NL2022/050365
(87) International publication number: WO 2023/277683

(56) References cited:
- DE-C- 906 275
- US-A- 4 634 202
- US-A1- 2006 280 553
- US-A1- 2009 051 161

## Description

The present invention relates to a strut comprising a connector. The invention further relates to an assembly of such a strut and an accessory or a further strut being coupled to the connector half.

Struts comprising an elongate member extending in an axial direction and defining a spacer are used for many applications, in particular for shoring applications. In this respect, shoring is defined as providing a temporary support to an instable load, normally to secure a risky situation and provide safety and rescue workers, such as firemen, the safest possible working conditions obtainable at that time. Such shoring applications may be very diverse, such as trench shoring, providing support against structural collapse of e.g. a building, and vehicle stabilization and lifting, in particular after a crash.

Apart from the great variety of applications mentioned above, there are also other factors that may differ per case. In particular the length of the strut may differ, from as small as 0.2 m up to 5 m. In order to be able to handle most situations, safety and rescue workers are often required to possess and maintain a large variety of different struts and strut components, and take them to rescue sites. Although they may be extendable and selectively connectable, a selection of multiple struts in differing lengths will also require considerable space in the vehicle of the safety and rescue workers. Moreover, such components need to be strong and are therefor heavy as well. In view of space and weight considerations, often only a selection of struts and strut components are taken to a site, this sometime leading to a sub optimal solution if the situation on-site differs from the expectations.

United States patent application US 2006/0280553 A1, which is considered to define the closest prior art, discloses a shaft coupler that comprises a connector half that is arranged at an axial end of an elongate member. The connector half allows the elongate member to be coupled to a further elongate member having a similar connector half in a rotationally locked manner, i.e. in a manner that prevents a relative rotation between the two elongate members relative to the axial axis thereof. The two connector halves are first engaged in an axial direction, and then rotated relative to each other to mechanically interlock them. To prevent the connector halves of the shaft coupler to be removed from each other by a relative rotation, the connector halves are secured in place by adding one or more locking blocks that are affixed to the elongate member. In this way, the shaft coupler is resistant to movement of the elongate members with respect to each other in any direction, including rotationally. At least the characterizing features of claim 1 are novel relative to this document.

The German patent DE 906 275, as well as the United States patent US 4,634,202 and the United States patent application US 2009/0051161 A1 are acknowledged as further prior art.

There is an ongoing need to improve the working conditions of safety and rescue workers, in particular in view of safety, but also in view of user comfort and occupational health.

An objective of the present invention is to provide a strut and an assembly comprising such a strut, that is improved relative to the prior art and wherein at least one of the above stated problems is obviated or alleviated.

Such objectives as indicated above, and/or other benefits or inventive effects, are attained according to the present disclosure by the assembly of features in the appended independent claims. In particular, said objective is achieved with the strut according to claim 1 of the present invention, that comprises an elongate member extending in an axial direction and defining a spacer, wherein at least one axial end of the elongate member comprises a connector half that is configured to be selectively coupled to a connector half of a further strut or to an accessory, wherein said connector half comprises protruding interlock elements and recessed interlock elements to allow said connector half to mechanically interlock with a geometrically identical connector half and thereby define a connector that allows the strut to be connected to a further strut of similar type in a rotationally locked manner, and wherein said connector half is further configured to be rotationally coupled to the accessory.

The connector is hereafter both referred to as connector and as strut connector. The connector comprises two geometrically identical connector halves, each having protruding interlock elements and recessed interlock elements. Due to each connector half of the two connector halves being configured to mechanically interlock with a geometrically identical connector half, the connector allows all struts and strut components having such a connector half to be coupled with each other, greatly increasing the versatility of the connector. It allows safety and rescue workers to swiftly make the desired connections between struts and strut components, and thereby secure an instable site as fast as possible, thereby creating safe working conditions. Contrary to prior art systems using connectors with a male and a female connector part, the flexibility of combining the available components is maximized. The increased versatility obtained if every connector half may be coupled to a similar connector half of another strut (component) allows safety and rescue workers to take less struts and strut components to a site. Less struts and strut components is directly related to less space and weight.

According to the invention, at least one axial end of the elongate member, and preferably both opposite axial ends thereof, comprise a connector half that is configured to be selectively coupled to a connector half of a further strut in a rotationally locked manner, or to an accessory in a rotationally free manner. The rotationally locked type of coupling between two struts, that prevents a relative rotational between the coupled struts, allows for additional structural strength and rigidity, and - for specific embodiments - also allows channels extending through the struts to be aligned in a very reliable way. However, by allowing an accessory to be rotationally coupled to the connector half, this accessory may rotate relative to the strut, thereby providing an increased flexibility and versatility.

The increased flexibility and versatility provided by allowing the accessory to rotate relative to, i.e. around, a longitudinal axis of the elongate member, is advantageous, because struts are used in a great variety of applications. As mentioned above, shoring applications are related to the temporary support of an instable load, whereas the nature of such shoring applications may be very diverse, such as trench shoring, providing support against structural collapse of e.g. a building, and vehicle stabilization and lifting, in particular after a crash. For different applications, different types of accessories are used, possibly also for applications that are not necessarily classified as shoring. For example, apart from being potentially instable, objects that are to be engaged with a strut may also extend under an angle relative to the longitudinal direction of the strut, or the (ground) surface supporting the strut may be uneven. Furthermore, especially when lifting an object, a relative displacement of the object relative to the strut may result in a change in a contact angle between the strut and the object supported by said strut. On top of this, it is desirable that a load provided to the strut is directed as central as possible relative to a cross section thereof, as this optimizes the buckling resistance of the strut. Furthermore, an accessory that is rotatable relative to the strut allows pneumatic or hydraulic couplings, that often extend radially relative to longitudinal direction of the strut, to be directed in any desired orientation. Besides the couplings being positioned in a readily available direction, this also allows to direct a pneumatic or hydraulic hose away from the object that is to be supported by the strut, thereby reducing the risk that said hose may get pinched or damaged. These examples clearly demonstrate that additional degrees of freedom for the strut result in increased flexibility and versatility, and consequently an improved safety and user comfort.

According to a preferred embodiment, the connector halves being geometrically identical is defined as said connector halves comprising identical geometrical shapes that allow a mating connection to be formed between the two connector halves.

The invention further relates to an assembly of the strut according to the invention, wherein the connector half of said strut is one of:
- connected to a connector half of a further strut in a rotationally locked manner to prevent a relative rotation between the strut and the further strut; and
- rotationally coupled to an accessory to thereby allow the accessory to be rotatable relative to the strut.

Preferred embodiments are the subject of the dependent claims.

The various aspects and features described and shown in the specification can be applied, individually, wherever possible. These individual aspects, and in particular the aspects and features described in the attached dependent claims, may be an invention in its own right that is related to a different problem relative to the prior art.

In the following description preferred embodiments of the present invention are further elucidated with reference to the drawing, in which:
Figure 1 is a perspective view of two struts being connected to each other, and a further strut being connected to an accessory, wherein all struts comprise a connector half of a strut connector according to the invention;
Figure 2 is an exploded perspective view of Figure 1;
Figure 3 is a detailed perspective view of the connector arranged between the two struts of Figure 1;
Figure 4 is a detailed perspective cross sectional view of the connector of Figure 3;
Figure 5 is an exploded view of Figure 4;
Figure 6 is a detailed perspective cross sectional view of a connection between a connector half and an accessory;
Figure 7 is an exploded view of Figure 7;
Figure 8 is an exploded perspective view of a further axial end of the strut having a coupler, and an accessory with a counter-coupler;
Figure 9 is a detailed cross sectional perspective view of Figure 8;
Figure 10 is a detailed cross sectional perspective view of the coupling of Figures 8 and 9 in a coupled state;
Figure 11A1 is a cross sectional side view of a connector half according to a second preferred embodiment;

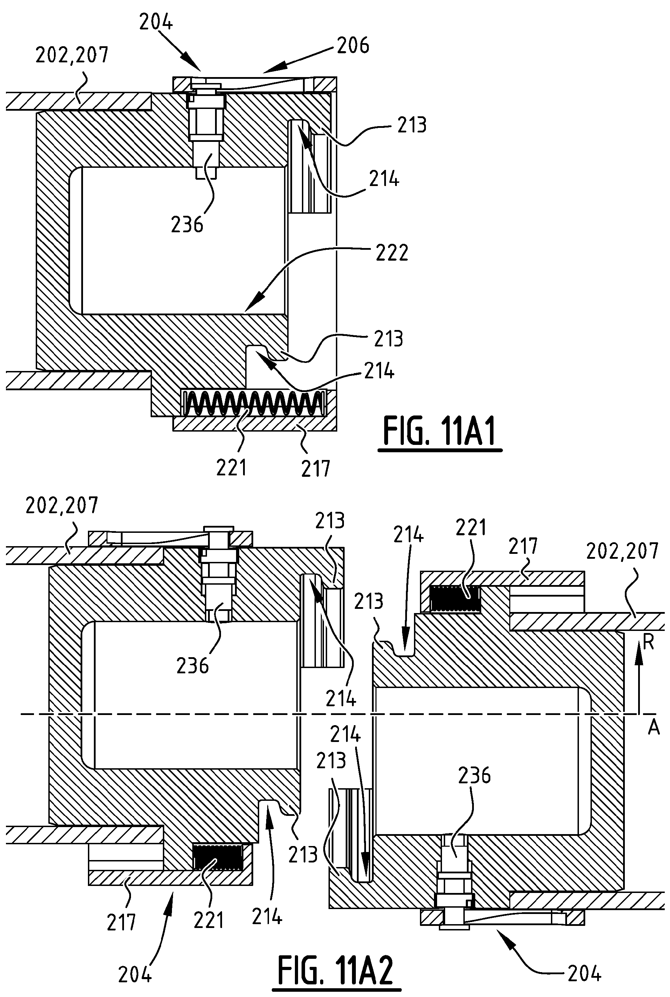

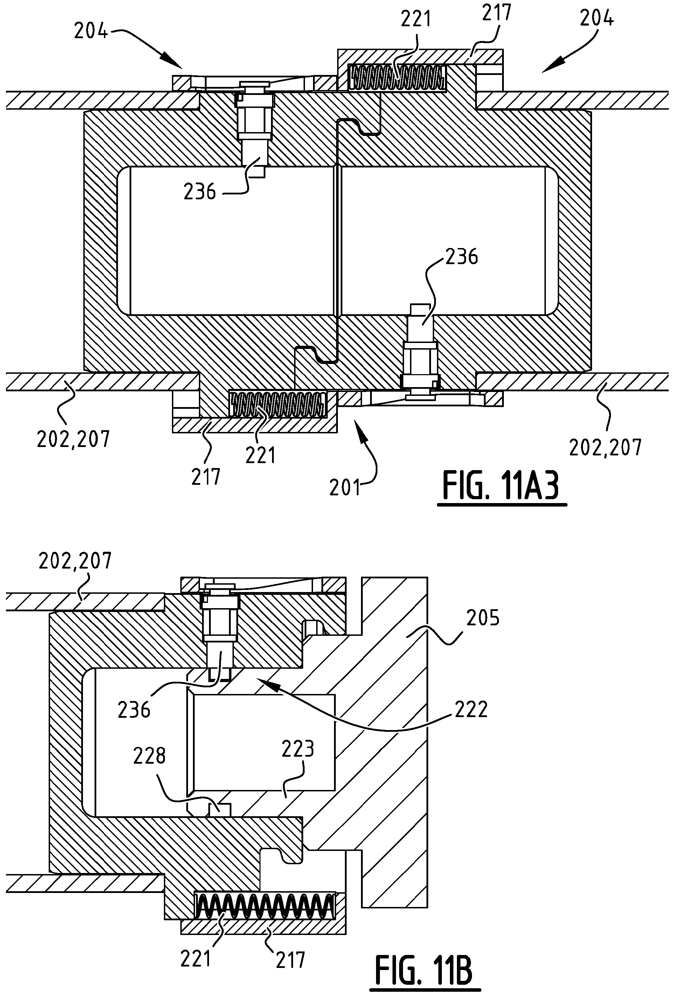

Figure 11A2 is a cross sectional side view of two connector halves of Figure 11A1 prior to establishing a connection there between;
Figure 11A3 is a cross sectional side view of the two connector halves of Figure 11A2 is a connected state;
Figure 11B is a cross sectional side view of a connector half of Figure 11A1 connected to an accessory;

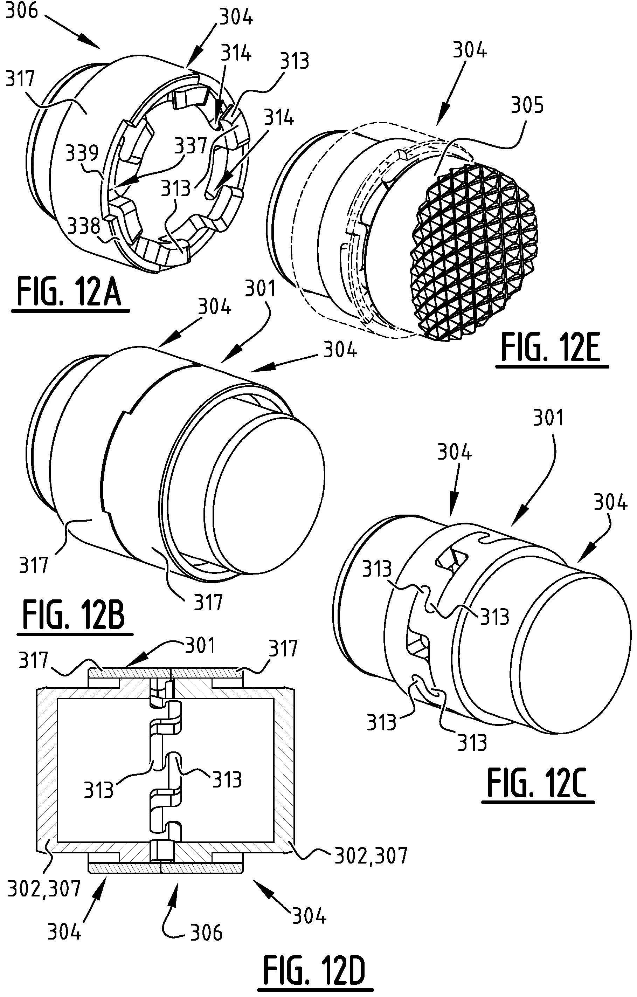

Figure 12A is a perspective view of a connector half according to a third preferred embodiment;
Figure 12B is a perspective view of two connector halves of Figure 12A in a connected state;
Figure 12C is a perspective view according to Figure 12B without locking elements;
Figure 12D is a cross sectional side view of the connected state of Figure 12C;
Figure 12E is a perspective view of the connector half of Figure 12A coupled to an accessory;

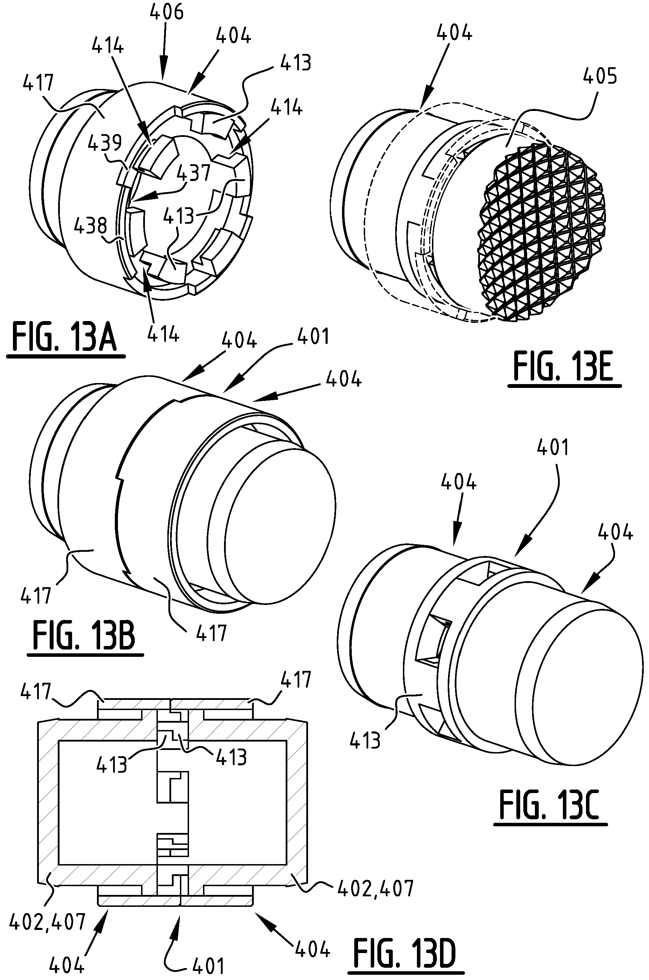

Figure 13A is a perspective view of a connector half according to a fourth preferred embodiment;
Figure 13B is a perspective view of two connector halves of Figure 13A in a connected state;
Figure 13C is a perspective view according to Figure 13B without locking elements;
Figure 13D is a cross sectional side view of the connected state of Figure 13C;
Figure 13E is a perspective view of the connector half of Figure 13A coupled to an accessory;

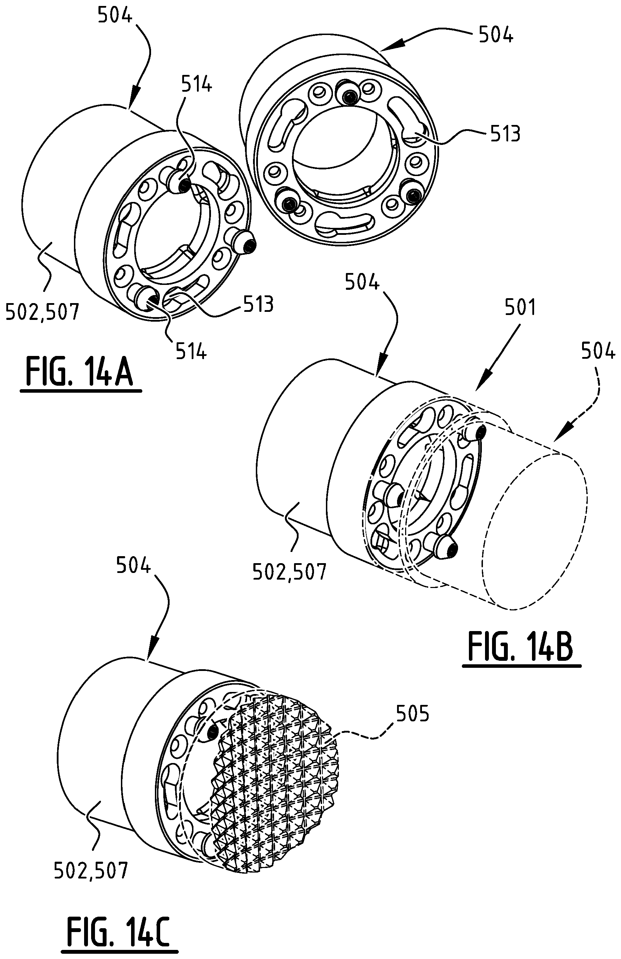

Figure 14A is a perspective view of two connector halves according to a fifth preferred embodiment;
Figure 14B is a perspective view of the two connector halves of Figure 14A in a connected state; and
Figure 14C is a perspective view of one of the connector halves of Figure 14A coupled to an accessory.

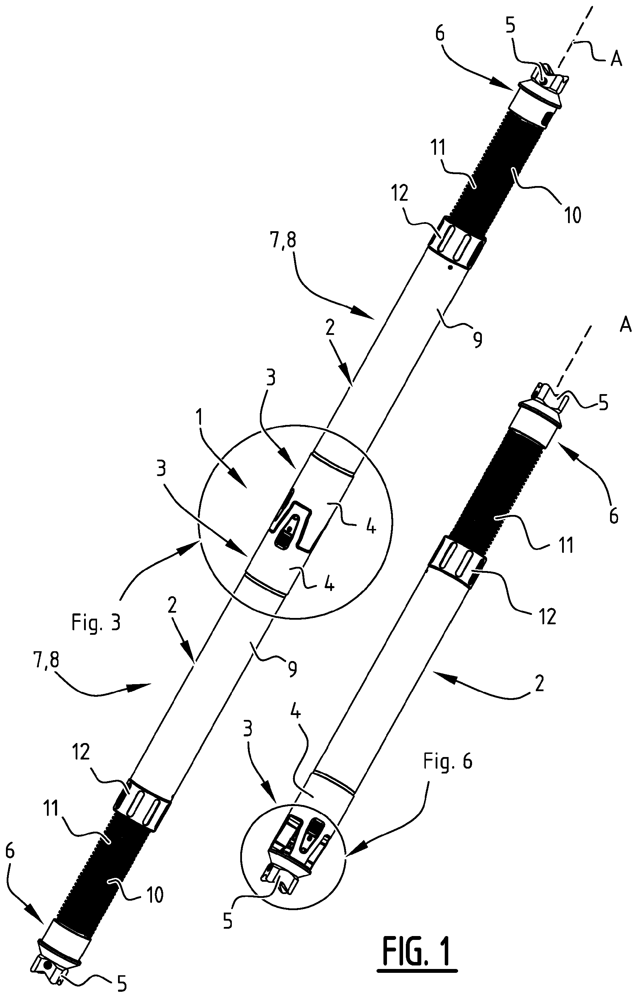

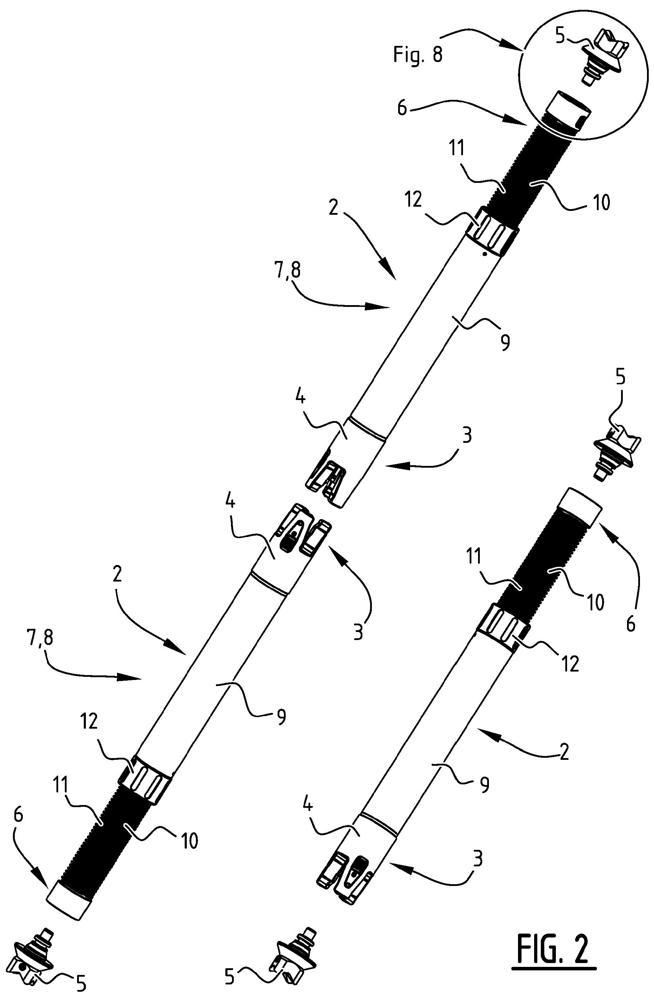

Various applications of a first preferred embodiment of a strut 2 according to the invention are shown in Figures 1 and 2. On the left side in Figure 1, two struts 2 are connected to each other via a connector 1, wherein an axial end 3 of each of the two struts 2 comprises a connector half 4. On the right side in Figure 1, one strut 2 is shown, wherein an accessory 5 is coupled to the connector half 4. A similar type of accessory 5 is also coupled to a further axial end 6 of the struts 2. Also the two connected struts 2 shown on the left side in Figure 1 are coupled to such an accessory 5. In Figure 2, the same struts 2 are shown in an exploded view, showing the two connector halves 4 in a disconnected state, and showing the accessories 5 being uncoupled from the further axial ends 6 of the struts 2.

The struts 2 comprise an elongate member 7 extending in an axial direction A and defining a spacer 8. One axial end 3 of the elongate member 7 comprises the connector half 4 of the connector 1 to thereby allow the strut 2 to be connected to a further strut 2 of similar type. In the preferred embodiment shown in Figures 1 and 2, the elongate member 7 of the strut 2 is extendable and comprises an outer member 9 and an inner member 10 that are moveable relative to each other, for example via a (not shown) hydraulic or pneumatic actuator. The outer member 9 and the inner member 10 may be lockable relative to each other, e.g. via a (not shown) pin and hole connection. The inner member 10 may comprise an external screw thread 11 along which a securing nut 12 with a (not shown) mating internal screw thread may be moved in the axial direction A to secure the inner member 10 relative to the outer member 9.

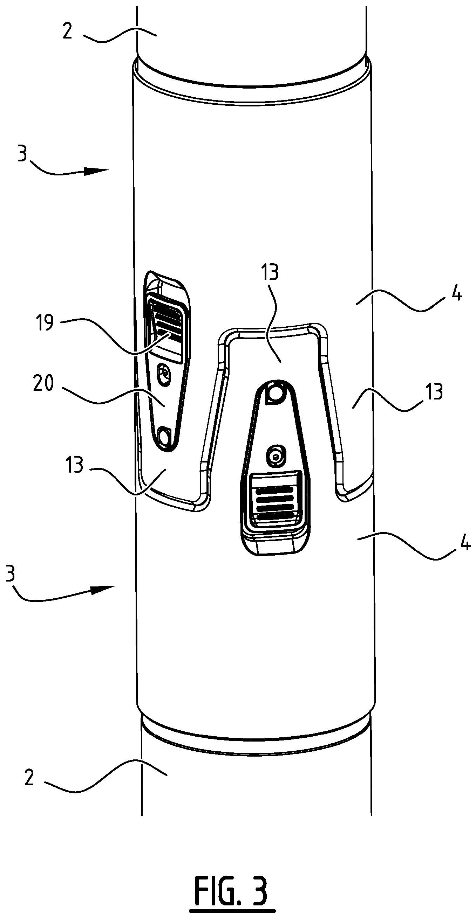

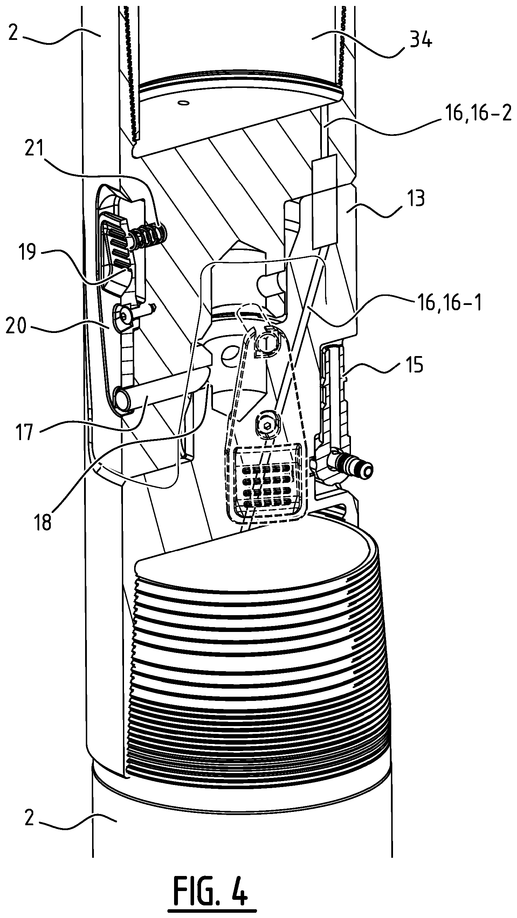

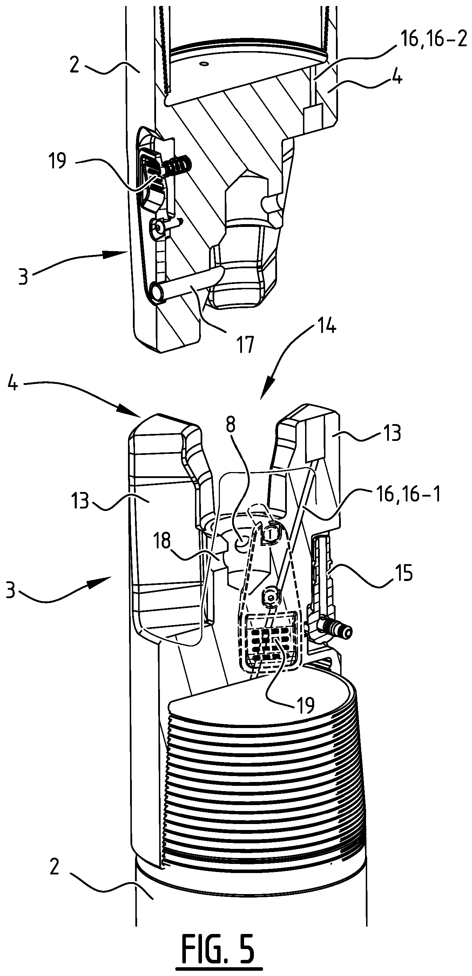

The connector 1 is configured to be used in combination with the strut 1, and comprises two geometrically identical connector halves 4 each having protruding interlock elements 13 and recessed interlock elements 14, wherein each connector half 4 of the two connector halves 4 is configured to mechanically interlock with a geometrically identical connector half 4. This mechanically interlocking of the two connector halves 4 relative to each other is shown in greater detail in Figures 3 to 5, wherein Figure 3 is a detailed perspective view of the connector 1 arranged between the two struts of Figure 1. Figures 4 and 5 shown perspective cross sectional views of the same connector 1 in a connected state and in a disconnected state, respectively.

The connector halves 4 being geometrically identical is defined as said connector halves 4 comprising identical geometrical shapes that allow a mating connection to be formed between the two connector halves 4. The skilled person will however understand that an interlocking functionality does explicitly not exclude the presence of other distinguishing features between two connector halves that may result in the connector halves not being 100% identical according to all criteria. For example, dependent on the application, additional features that do not interfere with the interlocking functionality may be present, such as hose connectors 15 of various type being arranged in the connector halves 4. It is however conceivable that a connector half 4 having a hose connector 15 of a pneumatic type is mechanically connected, i.e. mechanically interlocked, with a further connector half 4 having a hose connector of an hydraulic type, for example for specific situations wherein no pneumatic or hydraulic connection has to be established over the connector 1. The connector 15 may be fluidly connected to an inner space 34 of the strut 2 via a conduit 35.

The protruding interlock elements 13 and the recessed interlock elements 14 are distributed around the circumference of the connector half 4. More preferably, the protruding interlock elements 13 and the recessed interlock elements 14 are alternately distributed around the circumference of the connector half 4. In other words, the free space between adjacent protruding interlock elements 13 defines a recessed interlock element 14.

Preferably, the connector half 4 exhibits rotational symmetry of order two or more. Rotational symmetry of order n, also called n-fold rotational symmetry with respect to the axial axis means that a rotation by an angle of 360°/n does not change the object. Symmetry of order two, also referred to as a "two-fold" symmetry, means that the appearance of the shape is identical in two distinct orientations, i.e. the shape looks alike after a rotation of 180°. Thus, in the first preferred embodiment, the rotational symmetry is of an order three, and connections between two connector halves 4 may be made in steps of 120°.

In all embodiments, the connector half 4 comprises three or more than three protruding interlock elements 13 and three or more than three recessed interlock elements 14.

The connector half 4 may exhibit rotational symmetry of an order identical to the number of protruding interlock elements 13 and recessed interlock elements 14. Thus, in the case of three or more than three protruding interlock elements 13 and three or more than three recessed interlock elements 14, the number three also reflects the order of the rotational symmetry. Rotational symmetry of order three means that the appearance of the shape is identical in three distinct orientations, i.e. the shape looks alike after a rotation of 120°. By providing a connector 1 having a rotational symmetry of order three an optimum balance is obtained between strength and flexibility. On the one hand, sufficient strength is crucial for struts 2 that may have to withstand extreme (buckling) loads. On the other hand, a rotational symmetry of order three defines three relative orientations, i.e. every 120°, wherein the connector half 4 may be connected to another connector half 4, providing flexibility.

During use, the struts 2 will normally be exposed to an axially directed compressive load. If the protruding interlock elements 13 and the recessed interlock elements 14 are axially oriented relative to the connector half 4, this axial load may push the connector halves 4 towards each other and into a firm engagement. Although all embodiments exhibit axially oriented protruding interlock elements 13, especially the first and fifth embodiment benefit from such a firm engagement caused by an axial load on the struts 2.

In alternative embodiments, the protruding interlock elements 13 and the recessed interlock elements 14 may be radially oriented relative to the connector half 4 (second and fourth embodiment) and/or the protruding interlock elements 13 and the recessed interlock elements 14 may be circumferentially oriented relative to the connector half 4 (third and fifth embodiment). These other embodiments will be discussed in more detail below.

Each connector half 4 may comprise one or more than one channel 16 to allow a through feed of fluid from a first one of the two connector halves 4 to a second one of the two connector halves 4 (Figures 4 and 5). Preferably, each connector half 4 comprises at least two channels 16, wherein a first channel 16-1 of the at least two channels 16 is arranged in at least one of the protruding interlock elements 13, and a second channel 16-2 of the at least two channels 16 is arranged in at least one of the recessed interlock elements 14.

Preferably, each connector half 4 comprises a locking element 17 and a locking recess 18, wherein the locking element 17 is configured to engage in the locking recess 18 of a further connector half 4 when the connector half 4 is mechanically interlocked with a further connector half 4. Locking element 17 may be actuated via a push button 19 that comprises a hinged lever 20 that is pretensioned with a spring 21.

As described above, a main aspect contributing to obtaining increased versatility, is the use of two geometrically identical connector halves that each have protruding interlock elements and recessed interlock elements, wherein each connector half of the two connector halves is configured to mechanically interlock with a geometrically identical connector half.

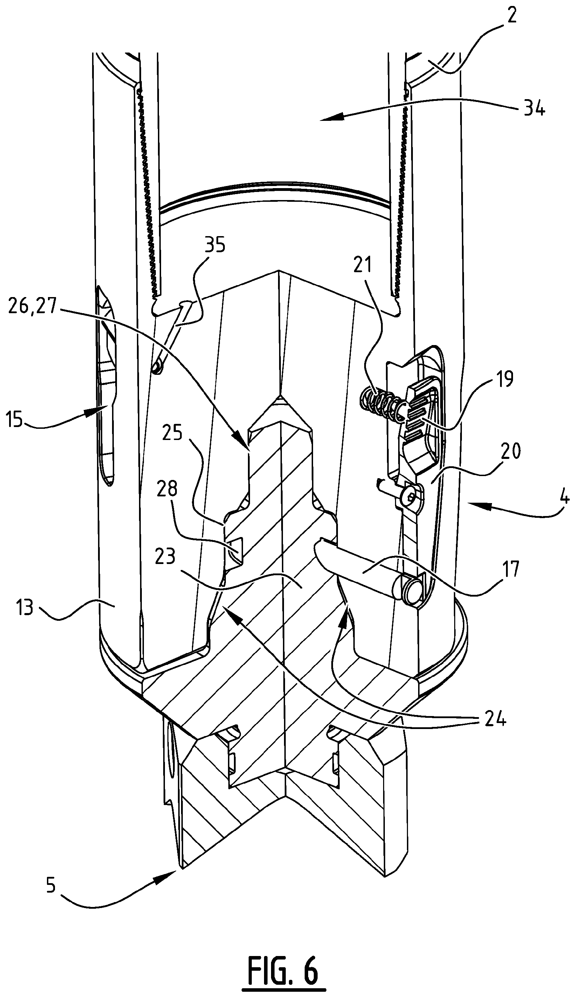

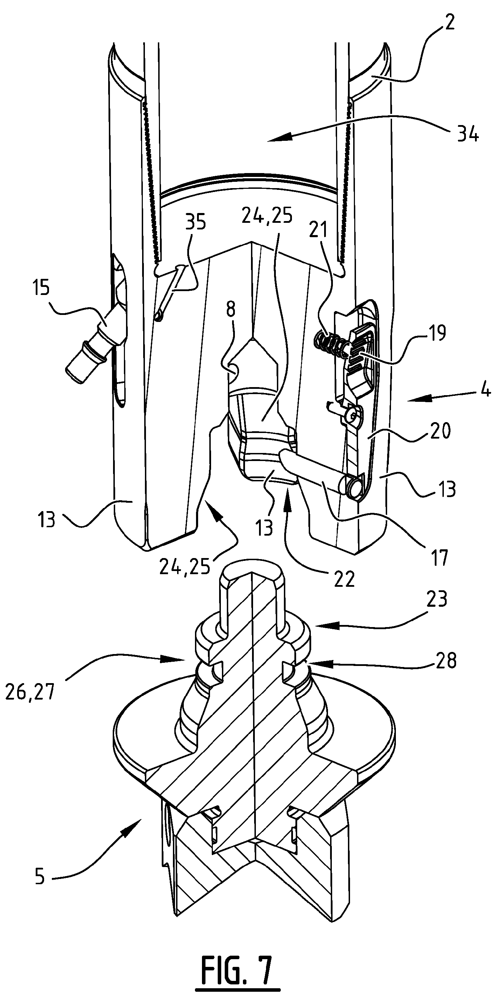

According to a further aspect, an even further increased versatility may be obtained, as will be explained below in Figures 6 and 7, that both show an assembly of a strut 2 having a connector half 4 as described above. However, according to this further aspect, an accessory 5 may also be coupled to the connector half 4. Thus, using the connector half 4 allows safety and rescue workers to selectively connect the connector half 4 to a further connector half 4 to thereby connect two struts 2 (shown on the left side in Figures 1 and 2), or to couple an accessory 5 to the connector half 4, thereby improving the versatility.

In order to allow the connector half 4 to couple to an accessory 5, the connector half 4 may comprises a coupler 22 that is configured to couple with a counter-coupler 23 of the accessory 5, wherein radially inward directed surfaces 24 of the protruding interlock elements 13 of the connector half 4 define an interface 25 of the coupler 22 that is configured to engage an outer circumference 26 of the counter-coupler 23. The axial end 6 of the elongate member thus comprises both the connector half 4 and the coupler 22.

Contrary to the connection that may be established between two connector halves 4, the accessory 5 may be rotationally coupled to the connector half 4, which may be beneficial in order to maintain optimal contact under some conditions.

The outer circumference 26 of the counter-coupler 23 exhibits a rotation symmetric outer surface 27 that is at least partially enclosed by the radially inward directed surfaces 24 of the protruding interlock elements 13.

As can be best seen in Figure 6, the locking element 17 may be further configured to engage in a circumferential recess 28 of the counter-coupler 23 when the accessory 5 is rotationally coupled to the connector half 4 to thereby allow the counter-coupler 23 of the accessory 5 to be locked in axial direction A relative to the coupler 22 of the connector half 4 while allowing the counter-coupler 23 to rotate relative to the coupler 22. Thus, the locking element 17 may have the functionality of locking two connector halves 4 (Figure 4), or to axially lock an accessory 5 to a connector half 4 (Figure 6). For types of accessories 5 that are preferably not rotatably coupled to the connector half 4, the circumferential recess 28 may be exchanged for a series of (not shown) discrete locking holes.

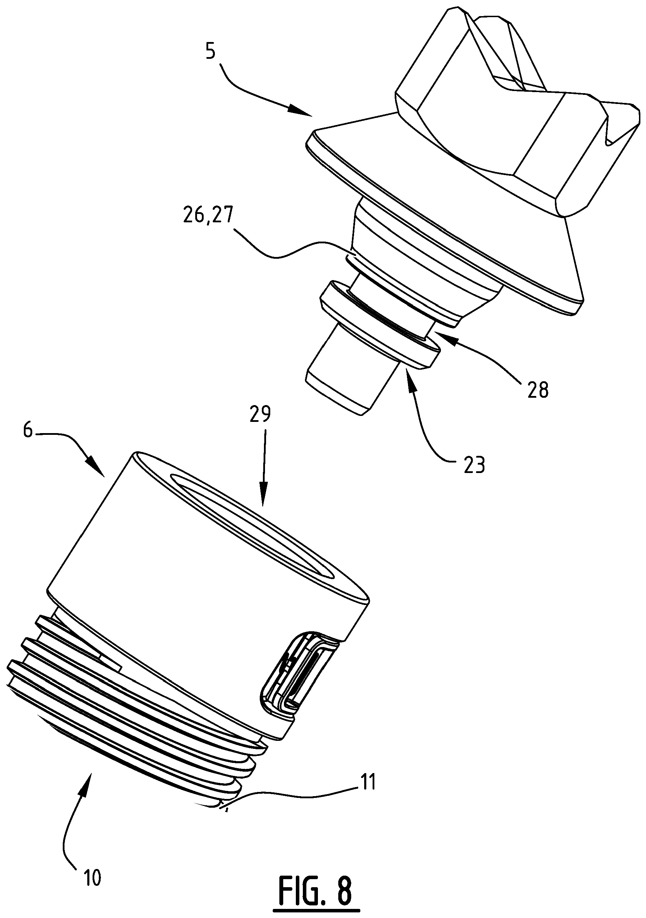

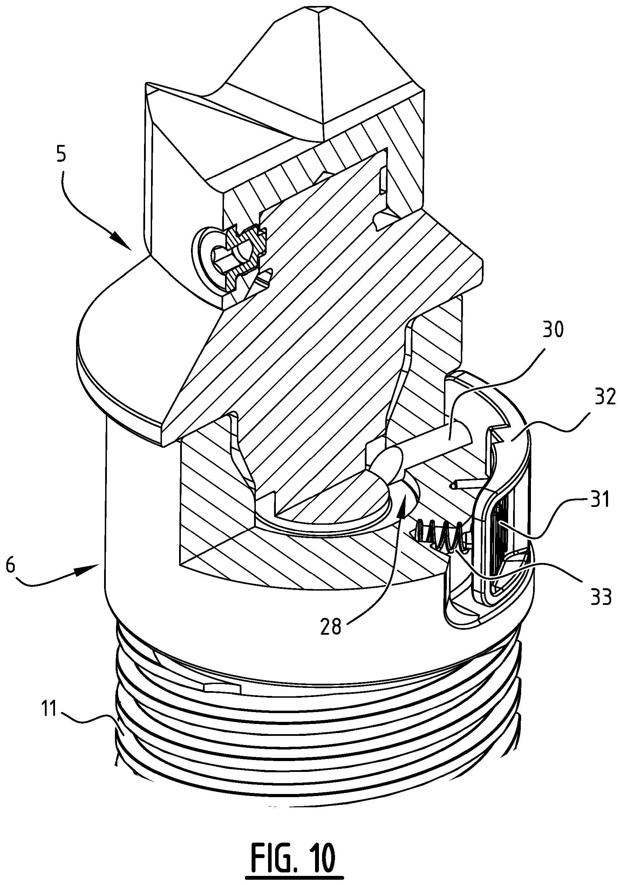

According to a still further aspect, an even further increased versatility may be obtained if the further axial end 6 of the strut 2 is also configured to be coupled with the accessory 5, as will be explained below in Figures 8 to 10. The further axial end 6 of the elongate member 7 of the strut 2 comprises a further coupler 29 that is configured to couple with a counter-coupler 23 of the accessory 5, wherein a radially inward directed surface 30 at said further axial end 6 defines an interface 31 of the further coupler 29 that is configured to engage the outer circumference 26 of the counter-coupler 23 and allow said counter-coupler 23 to be rotationally coupled to the further axial end 6 of the elongate member 7 (Figure 10).

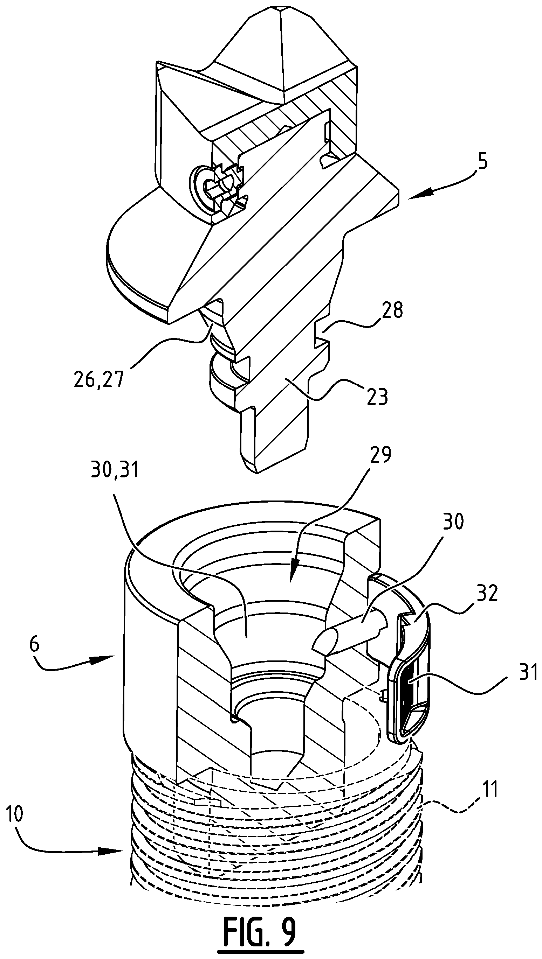

The coupler 22 and the further coupler 29 enclose a similar shape, as becomes evident when comparing Figures 5 and 9. However, at the axial end 3 comprising the connector half 4, the shape is interrupted at the position of the recessed interlock elements 14.

In order to lock the counter-coupler 23 of the accessory 5 in axial direction A relative to the further coupler 29 at the further end 6 of the strut 2, while allowing the counter-coupler 23 to rotate relative to the further coupler 29, a further locking element 30 may be applied. This further locking element 30 is configured to engage the circumferential recess 28 of the counter-coupler 23 when the accessory 5 is rotationally coupled to the further coupler 29 to thereby allow the counter-coupler 23 of the accessory 5 to be locked in axial direction A relative to the further coupler 29 at the further end 6 of the strut 2 while allowing the counter-coupler 23, and thus the accessory 5, to rotate relative to the further coupler 29. Further locking element 30 may be actuated with a similar construction as provided at the connecter half 4. More in particular, said construction may comprise a push button 31 that comprises a hinged lever 32 that is pretensioned with a spring 33 (see Figure 10).

In the description here below, some further embodiments will be briefly discussed. Similar reference numbers apply to the similar features, however, the number is increased with two hundred for the second preferred embodiment, three hundred for the third preferred embodiment, etcetera. In order to prevent repetition, the main focus when discussing the further preferred embodiments will be on the most significant differences relative to the first preferred embodiment, which is considered the best mode for carrying out the invention.

A second preferred embodiment is shown in Figures 11A1, 11A2, 11A3 and 11B. Each connector 201 comprises two geometrically identical connector halves 204 each having protruding interlock elements 213 and recessed interlock elements 214, wherein each connector half 204 of the two connector halves 204 is configured to mechanically interlock with a geometrically identical connector half 204 (Figure 11A3). Similar to the first preferred embodiment, the connector half 204 may also couple to a counter-coupler 223 of an accessory 205 (Figure 11B).

A locking element 217 is pretensioned with a spring 221. In Figure 11A2, this spring 221 is shown in a compressed state that will occur if the two connector halves 204 are brought into compressive contact in the relative orientation shown in Figure 11A2. For illustrative purposes, the two connector halves 204 are however shown at a slight axial offset to show how the protruding interlock elements 213 and recessed interlock elements 214 of one of the connector halves 204 may mechanically interlock with respectively corresponding recessed interlock elements 214 and protruding interlock elements 213, of the other connector half 204.

After the two connector halves 204 have been brought into abutting contact and thereby compressed the springs 221, they are moved in a radial direction R transverse to the axial direction A to engage the mating protruding interlock elements 213 and recessed interlock elements 214 of both connector halves 204. The locking elements 217 are now pushed outward in the axial direction by their springs 221, thereby securing the two connector halves 204 against unintended release of their connection (Figure 11A3). Due to the shape of the two connector halves 204, they are unable to rotate relative to each other.

As shown in Figure 11B, the connector half 204 may also couple to a counter-coupler 223 of an accessory 205. A coupler locking element 236 may engage in a circumferential recess 228 of the counter-coupler 223 when the accessory 205 is rotationally coupled to the connector half 204 to thereby allow the counter-coupler 223 of the accessory 205 to be locked in axial direction A relative to the coupler 222 of the connector half 204 while allowing the counter-coupler 223 to rotate relative to the coupler 222.

A third preferred embodiment is shown in Figures 12A to 12E. Each connector 301 comprises two geometrically identical connector halves 304 each having protruding interlock elements 313 and recessed interlock elements 314, wherein each connector half 304 of the two connector halves 304 is configured to mechanically interlock with a geometrically identical connector half 304 (Figures 12B, 12C and 12D). Similar to the first preferred embodiment, the connector half 304 may also couple to a counter-coupler of an accessory 305 (Figure 12E).

The connector halves 304 exhibit rotational symmetry of an order six. In other words, they may be connected to each other every 60°. In this embodiment, the protruding interlock elements 313 and the recessed interlock elements 314 are axially and circumferentially oriented relative to the connector half 304.

The ring-shaped locking elements 317 are pretensioned in the axial direction by a (not shown) spring, that pushes the locking elements 317 axially outward relative to the respective connector half 304. Due to the stepped edge 337 having protruding sections 338 and recessed sections 339, two ring shaped locking elements 317 of two connector halves 304 may engage with each other (Figure 12B), and thereby provide a rotational lock of the connector 301. This rotational lock may secure the two connector halves 304 against unintended release that may be caused if the two connector halves 304 could rotate relative to each other. Figure 12C shows the situation of Figure 12B, but for illustrative purposes the ring-shaped locking elements 317 are not shown in order to provide an unobstructed view of the connection between the two connector halves 304.

A fourth preferred embodiment is shown in Figures 13A to 13E. Each connector 401 comprises two geometrically identical connector halves 404 each having protruding interlock elements 413 and recessed interlock elements 414, wherein each connector half 404 of the two connector halves 404 is configured to mechanically interlock with a geometrically identical connector half 404 (Figures 13B, 13C and 13D). Similar to the first preferred embodiment, the connector half 404 may also couple to a counter-coupler of an accessory 405 (Figure 13E).

The connector halves 404 exhibit rotational symmetry of an order six. In other words, they may be connected to each other every 60°. In this embodiment, the protruding interlock elements 413 and the recessed interlock elements 414 are axially and circumferentially oriented relative to the connector half 404.

The ring shaped locking elements 417 are pretensioned in the axial direction by a (not shown) spring, that pushes the locking elements 417 axially outward relative to the respective connector half 404. Due to the stepped edge 437 having protruding sections 438 and recessed sections 439, two ring shaped locking elements 417 of two connector halves 404 may engage with each other (Figure 13B), and thereby provide a rotational lock of the connector 401. This rotational lock may secure the two connector halves 404 against unintended release that may be caused if the two connector halves 404 could rotate relative to each other. Figure 13C shows the situation of Figure 12B, but for illustrative purposes the ring shaped locking elements 417 are not shown in order to provide an unobstructed view of the connection between the two connector halves 404.

A fifth preferred embodiment is shown in Figures 14A to 14C. Each connector 501 comprises two geometrically identical connector halves 504 each having protruding interlock elements 513 and recessed interlock elements 514, wherein each connector half 504 of the two connector halves 504 is configured to mechanically interlock with a geometrically identical connector half 504 (Figure 14B). Similar to the first preferred embodiment, the connector half 504 may also couple to a counter-coupler of an accessory 505 (Figure 14C).

The connector halves 504 exhibit rotational symmetry of an order three. In other words, they may be connected to each other every 120°. In this embodiment, the protruding interlock elements 514 and the recessed interlock elements 513 are axially oriented relative to the connector half 504.

In Figure 14B, ring shaped locking elements are not shown for illustrative purposes to provide an unobstructed view of the connection between the two connector halves 504. In order to provide a rotational lock of the connector 504, it is preferred that this embodiment comprises ring shaped locking elements conform the third and fourth preferred embodiments discussed above.

Although they show preferred embodiments of the invention, the above described embodiments are intended only to illustrate the invention and not to limit in any way the scope of the invention. Accordingly, it should be understood that where features mentioned in the appended claims are followed by reference signs, such signs are included solely for the purpose of enhancing the intelligibility of the claims and are in no way limiting on the scope of the claims. Furthermore, it is particularly noted that the skilled person can combine technical measures of the different embodiments. The scope of protection is defined solely by the following claims.

## Claims

1. A strut (2; 202; 302; 402; 502), comprising an elongate member (7; 207; 307; 407; 507) extending in an axial direction (A) and defining a spacer (8),
wherein at least one axial end (3) of the elongate member comprises a connector half (4; 204; 304; 404; 504) that is configured to be selectively coupled to a connector half of a further strut or to an accessory (5; 205; 305; 405; 505), and
wherein said connector half comprises protruding interlock elements (13; 213; 313; 413; 513) and recessed interlock elements (14; 214; 314; 414; 514) to allow said connector half to mechanically interlock with a geometrically identical connector half and thereby define a connector that allows the strut to be connected to a further strut of similar type in a rotationally locked manner,
**characterized in that** said connector half is further configured to be rotationally coupled to the accessory.

2. The strut according to claim 1, wherein the elongate member is extendable and comprises an outer member (9) and an inner member (10) that are moveable relative to each other.

3. The strut according to claim 1 or 2, wherein the connector halves being geometrically identical is defined as said connector halves comprising identical geometrical shapes that allow a mating connection to be formed between the two connector halves.

4. The strut according to any of the previous claims, wherein the protruding interlock elements and the recessed interlock elements are distributed around the circumference of the connector half,
wherein, preferably, the protruding interlock elements and the recessed interlock elements are alternately distributed around the circumference of the connector half.

5. The strut according to any of the previous claims, wherein the connector half exhibits rotational symmetry of order two or more.

6. The strut according to any of the previous claims, wherein the connector half comprises three or more than three protruding interlock elements and three or more than three recessed interlock elements,
wherein, preferably, the connector half exhibits rotational symmetry of an order identical to the number of protruding interlock elements and recessed interlock elements.

7. The strut according to one or more than one of the foregoing claims, wherein the protruding interlock elements and the recessed interlock elements are axially oriented relative to the connector half.

8. The strut according to one or more than one of the foregoing claims, wherein the protruding interlock elements and the recessed interlock elements are radially oriented relative to the connector half.

9. The strut according to one or more than one of the foregoing claims, wherein the protruding interlock elements and the recessed interlock elements are circumferentially oriented relative to the connector half.

10. The strut according to one or more than one of the foregoing claims, wherein each connector half comprises one or more than one channel (16; 16-1, 16-2) to allow a through feed of fluid from a first one of the two connector halves to a second one of the two connector halves,
wherein, preferably, each connector half comprises at least two channels, a first channel (16-1) of the at least two channels being arranged in at least one of the protruding interlock elements, and a second channel (16-2) of the at least two channels being arranged in at least one of the recessed interlock elements.

11. The strut according to one or more than one of the foregoing claims, wherein each connector half comprises a locking element (17; 217; 317; 417) and a locking recess (18), wherein the locking element is configured to engage in the locking recess of a further connector half when the connector half is mechanically interlocked with a further connector half.

12. An assembly comprising a strut (2; 202; 302; 402; 502) according to one or more than one of the foregoing claims, wherein the connector half (4; 204; 304; 404; 504) of said strut is:
connected to a connector half of a further strut in a rotationally locked manner to prevent a relative rotation between the strut and the further strut; or
rotationally coupled to an accessory (5; 205; 305; 405; 505) to thereby allow the accessory to be rotatable relative to the strut.

13. The assembly according to claim 12, wherein the connector half comprises a coupler (22; 222) that is configured to couple with a counter-coupler (23; 223) of the accessory, wherein radially inward directed surfaces (24) of the protruding interlock elements of the connector half define an interface of the coupler that is configured to engage an outer circumference of the counter-coupler,
wherein, preferably, the outer circumference of the counter-coupler exhibits a rotation symmetric outer surface that is at least partially enclosed by the radially inward directed surfaces of the protruding interlock elements.

14. The assembly according to claim 13, in so far as being dependent on claim 11, wherein the locking element is further configured to engage in a circumferential recess of the counter-coupler when the accessory is rotationally coupled to the connector half to thereby allow the counter-coupler of the accessory to be locked in axial direction relative to the coupler of the connector half while allowing the counter-coupler to rotate relative to the coupler.

15. The assembly according to any of the claims 12-14, wherein a further axial end (6) of the elongate member of the strut comprises a further coupler (29) that is configured to couple with a counter-coupler of an accessory, wherein a radially inward directed surface at said further axial end defines an interface of the further coupler that is configured to engage the outer circumference of the counter-coupler and allow said counter-coupler to be rotationally coupled to the further axial end of the elongate member.

## Patentansprüche

1. Strebe (2; 202; 302; 402; 502), umfassend ein längliches Element (7; 207; 307; 407; 507), das sich in einer axialen Richtung (A) erstreckt und einen Abstandshalter (8) definiert,
wobei mindestens ein axiales Ende (3) des länglichen Elements eine Verbindungshälfte (4; 204; 304; 404; 504) umfasst, die konfiguriert ist, um selektiv an eine Verbindungshälfte einer weiteren Strebe oder an ein Zubehör (5; 205; 305; 405; 505) gekoppelt zu werden, und
wobei die Verbindungshälfte vorstehende Verriegelungselemente (13; 213; 313; 413; 513) und vertiefte Verriegelungselemente (14; 214; 314; 414; 514) umfasst, um der Verbindungshälfte zu ermöglichen, mechanisch mit einer geometrisch identischen Verbindungshälfte zu verriegeln und dadurch einen Verbinder zu definieren, der es ermöglicht, die Strebe mit einer weiteren Strebe ähnlichen Typs in einer drehverriegelten Weise zu verbinden,
**dadurch gekennzeichnet, dass** die Verbindungshälfte ferner konfiguriert ist, um drehfest mit dem Zubehör gekoppelt zu werden.

2. Strebe nach Anspruch 1, wobei das längliche Element ausfahrbar ist und ein Außenelement (9) und ein Innenelement (10) umfasst, die relativ zueinander beweglich sind.

3. Strebe nach Anspruch 1 oder 2, wobei die geometrisch identischen Verbindungshälften dadurch definiert sind, dass die Verbindungshälften identische geometrische Formen umfassen, die es ermöglichen, dass eine zusammenpassende Verbindung zwischen den zwei Verbindungshälften gebildet wird.

4. Strebe nach einem der vorstehenden Ansprüche, wobei die vorstehenden Verriegelungselemente und die vertieften Verriegelungselemente um den Umfang der Verbindungshälfte verteilt sind,
wobei vorzugsweise die vorstehenden Verriegelungselemente und die vertieften Verriegelungselemente abwechselnd um den Umfang der Verbindungshälfte verteilt sind.

5. Strebe nach einem der vorstehenden Ansprüche, wobei die Verbindungshälfte eine Drehsymmetrie zweiter oder höherer Ordnung aufweist.

6. Strebe nach einem der vorstehenden Ansprüche, wobei die Verbindungshälfte drei oder mehr als drei vorstehende Verriegelungselemente und drei oder mehr als drei vertiefte Verriegelungselemente umfasst,
wobei vorzugsweise die Verbindungshälfte eine Drehsymmetrie einer Ordnung aufweist, die identisch mit der Anzahl der vorstehenden Verriegelungselemente und vertieften Verriegelungselemente ist.

7. Strebe nach einem oder mehreren der vorstehenden Ansprüche, wobei die vorstehenden Verriegelungselemente und die vertieften Verriegelungselemente axial relativ zu der Verbindungshälfte orientiert sind.

8. Strebe nach einem oder mehreren der vorstehenden Ansprüche, wobei die vorstehenden Verriegelungselemente und die vertieften Verriegelungselemente radial bezüglich der Verbindungshälfte orientiert sind.

9. Strebe nach einem oder mehreren der vorstehenden Ansprüche, wobei die vorstehenden Verriegelungselemente und die vertieften Verriegelungselemente umlaufend relativ zu der Verbindungshälfte orientiert sind.

10. Strebe nach einem oder mehr als einem der vorstehenden Ansprüche, wobei jede Verbindungshälfte einen oder mehr als einen Kanal (16; 16-1, 16-2) umfasst, um eine Durchführung von Fluid von einer ersten der zwei Verbindungshälften zu einer zweiten der zwei Verbindungshälften zu ermöglichen,
wobei vorzugsweise jede Verbindungshälfte mindestens zwei Kanäle umfasst, wobei ein erster Kanal (16-1) der mindestens zwei Kanäle in mindestens einem der vorstehenden Verriegelungselemente angeordnet ist und ein zweiter Kanal (16-2) der mindestens zwei Kanäle in mindestens einem der vertieften Verriegelungselemente angeordnet ist.

11. Strebe nach einem oder mehreren der vorstehenden Ansprüche, wobei jede Verbindungshälfte ein Verriegelungselement (17; 217; 317; 417) und eine Verriegelungsvertiefung (18) umfasst, wobei das Verriegelungselement konfiguriert ist, um in die Verriegelungsvertiefung einer weiteren Verbindungshälfte einzugreifen, wenn die Verbindungshälfte mechanisch mit einer weiteren Verbindungshälfte verriegelt ist.

12. Anordnung, umfassend eine Strebe (2; 202; 302; 402; 502) nach einem oder mehreren der vorstehenden Ansprüche, wobei die Verbindungshälfte (4; 204; 304; 404; 504) der Strebe:
mit einer Verbindungshälfte einer weiteren Strebe drehfest verbunden ist, um eine Relativdrehung zwischen der Strebe und der weiteren Strebe zu verhindern; oder
drehfest mit einem Zubehör (5; 205; 305; 405; 505) gekoppelt ist, um dadurch zu ermöglichen, dass das Zubehör relativ zu der Strebe drehbar ist.

13. Anordnung nach Anspruch 12, wobei die Verbindungshälfte einen Koppler (22; 222) umfasst, der konfiguriert ist, um mit einem Gegenkoppler (23; 223) des Zubehörs zu koppeln,
wobei radial nach innen gerichtete Oberflächen (24) der vorstehenden Verriegelungselemente der Verbindungshälfte eine Schnittstelle des Kopplers definieren, der konfiguriert ist, um einen Außenumfang des Gegenkopplers in Eingriff zu nehmen,
wobei vorzugsweise der Außenumfang des Gegenkopplers eine drehsymmetrische Außenoberfläche aufweist, die mindestens teilweise von den radial nach innen gerichteten Oberflächen der vorstehenden Verriegelungselemente umschlossen ist.

14. Anordnung nach Anspruch 13, soweit abhängig von Anspruch 11, wobei das Verriegelungselement ferner konfiguriert ist, um in eine umlaufende Vertiefung des Gegenkopplers einzugreifen, wenn das Zubehör drehfest mit der Verbindungshälfte gekoppelt ist, um dadurch zu ermöglichen, dass der Gegenkoppler des Zubehörs in axialer Richtung relativ zu dem Koppler der Verbindungshälfte verriegelt wird, während ermöglicht wird, dass sich der Gegenkoppler relativ zu dem Koppler dreht.

15. Anordnung nach einem der Ansprüche 12 bis 14, wobei ein weiteres axiales Ende (6) des länglichen Elements der Strebe einen weiteren Koppler (29) umfasst, der konfiguriert ist, um mit einem Gegenkoppler eines Zubehörs zu koppeln, wobei eine radial nach innen gerichtete Oberfläche an dem weiteren axialen Ende eine Schnittstelle des weiteren Kopplers definiert, der konfiguriert ist, um mit dem Außenumfang des Gegenkopplers in Eingriff zu stehen und zu ermöglichen, dass der Gegenkoppler drehfest mit dem weiteren axialen Ende des länglichen Elements gekoppelt ist.

## Revendications

1. Entretoise (2 ; 202 ; 302 ; 402 ; 502), comprenant un membre allongé (7 ; 207 ; 307 ; 407 ; 507) s'étendant dans une direction axiale (A) et définissant un écarteur (8),
dans lequel au moins une extrémité axiale (3) du membre allongé comprend une moitié d'organe de liaison (4 ; 204 ; 304 ; 404 ; 504) qui est conçue pour être sélectivement accouplée à une moitié d'organe de liaison d'une autre entretoise ou à un accessoire (5 ; 205 ; 305 ; 405 ; 505), et
dans lequel ladite moitié d'organe de liaison comprend des éléments de verrouillage en saillie (13 ; 213 ; 313 ; 413 ; 513) et des éléments de verrouillage en creux (14 ; 214 ; 314 ; 414 ; 514) pour permettre à ladite moitié d'organe de liaison de s'engrener mécaniquement avec une moitié d'organe de liaison géométriquement identique et définir de ce fait un organe de liaison qui permet à l'entretoise d'être reliée à une autre entretoise de type similaire d'une manière verrouillée en rotation,
**caractérisée en ce que** ladite moitié d'organe de liaison est en outre conçue pour être accouplée en rotation à l'accessoire.

2. Entretoise selon la revendication 1, dans laquelle le membre allongé est extensible et comprend un membre externe (9) et un membre interne (10) qui sont mobiles l'un relativement à l'autre.

3. Entretoise selon la revendication 1 ou 2, dans laquelle les moitiés d'organe de liaison étant géométriquement identiques sont définies comme lesdites moitiés d'organe de liaison comprenant des formes géométriques identiques qui permettent à une liaison par emboîtement d'être formée entre les deux moitiés d'organe de liaison.

4. Entretoise selon l'une quelconque des revendications précédentes, dans laquelle les éléments de verrouillage en saillie et les éléments de verrouillage en creux sont répartis sur la circonférence de la moitié d'organe de liaison,
dans laquelle, de préférence, les éléments de verrouillage en saillie et les éléments de verrouillage en creux sont répartis alternativement autour de la circonférence de la moitié d'organe de liaison.

5. Entretoise selon l'une quelconque des revendications précédentes, dans laquelle la moitié d'organe de liaison présente une symétrie de rotation d'ordre deux ou plus.

6. Entretoise selon l'une quelconque des revendications précédentes, dans laquelle la moitié d'organe de liaison comprend trois ou plus de trois éléments de verrouillage en saillie et trois ou plus de trois éléments de verrouillage en creux,
dans laquelle, de préférence, la moitié d'organe de liaison présente une symétrie de rotation d'un ordre identique au nombre d'éléments de verrouillage en saillie et d'éléments de verrouillage en creux.

7. Entretoise selon une ou plusieurs des revendications qui précèdent, dans laquelle les éléments de verrouillage en saillie et les éléments de verrouillage en creux sont orientés axialement relativement à la moitié d'organe de liaison.

8. Entretoise selon une ou plusieurs des revendications qui précèdent, dans laquelle les éléments de verrouillage en saillie et les éléments de verrouillage en creux sont orientés radialement relativement à la moitié d'organe de liaison.

9. Entretoise selon une ou plusieurs des revendications qui précèdent, dans laquelle les éléments de verrouillage en saillie et les éléments de verrouillage en creux sont orientés circonférentiellement relativement à la moitié d'organe de liaison.

10. Entretoise selon une ou plusieurs des revendications qui précèdent, dans laquelle chaque moitié d'organe de liaison comprend un ou plusieurs canaux (16 ; 16-1, 16-2) pour permettre une alimentation traversante de fluide depuis une première des deux moitiés d'organe de liaison jusqu'à une seconde des deux moitiés d'organe de liaison,
dans lequel, de préférence, chaque moitié d'organe de liaison comprend au moins deux canaux, un premier canal (16-1) parmi les au moins deux canaux étant agencé dans au moins l'un parmi les éléments de verrouillage en saillie, et un second canal (16-2) parmi les au moins deux canaux étant agencé dans au moins l'un parmi les éléments de verrouillage en creux.

11. Entretoise selon une ou plusieurs des revendications qui précèdent, dans laquelle chaque moitié d'organe de liaison comprend un élément de verrouillage (17 ; 217 ; 317 ; 417) et un creux de verrouillage (18), dans laquelle l'élément de verrouillage est conçu pour se mettre en prise dans le creux de verrouillage d'une autre moitié d'organe de liaison lorsque la moitié d'organe de liaison est mécaniquement verrouillée avec une autre moitié d'organe de liaison.

12. Ensemble comprenant une entretoise (2 ; 202 ; 302 ; 402 ; 502) selon une ou plusieurs des revendications qui précèdent, dans lequel la moitié d'organe de liaison (4 ; 204 ; 304 ; 404 ; 504) de ladite entretoise est :
reliée à une moitié d'organe de liaison d'une autre entretoise d'une manière verrouillée en rotation pour empêcher une rotation relative entre l'entretoise et l'autre entretoise ; ou
accouplée en rotation à un accessoire (5 ; 205 ; 305 ; 405 ; 505) pour permettre de ce fait à l'accessoire d'être rotatif relativement à l'entretoise.

13. Ensemble selon la revendication 12, dans lequel la moitié d'organe de liaison comprend **un** accoupleur (22 ; 222) qui est conçu pour s'accoupler avec **un** contre-accoupleur (23 ; 223) de l'accessoire,
dans lequel des surfaces dirigées radialement vers l'intérieur (24) des éléments de verrouillage en saillie de la moitié d'organe de liaison définissent une interface de l'accoupleur qui est conçue pour mettre en prise une circonférence externe du contre-accoupleur,
dans lequel, de préférence, la circonférence externe du contre-accoupleur présente une surface externe à symétrie de rotation qui est au moins partiellement entourée par les surfaces dirigées radialement vers l'intérieur des éléments de verrouillage en saillie.

14. Ensemble selon la revendication 13, pour autant qu'il dépende de la revendication 11, dans lequel l'élément de verrouillage est en outre conçu pour mettre en prise un creux circonférentiel du contre-accoupleur lorsque l'accessoire est accouplé en rotation à la moitié d'organe de liaison pour permettre de ce fait au contre-accoupleur de l'accessoire d'être verrouillé dans la direction axiale par rapport à l'accoupleur de la moitié d'organe de liaison tout en permettant au contre-accoupleur d'entrer en rotation par rapport à l'accoupleur.

15. Ensemble selon l'une quelconque des revendications 12 à 14, dans lequel une autre extrémité axiale (6) du membre allongé de l'entretoise comprend un autre accoupleur (29) qui est conçu pour s'accoupler avec un contre-accoupleur d'un accessoire, dans lequel une surface dirigée radialement vers l'intérieur au niveau de ladite autre extrémité axiale définit une interface de l'autre accoupleur qui est conçue pour mettre en prise la circonférence externe du contre-accoupleur et permettre audit contre-accoupleur d'être accouplé en rotation jusqu'à l'autre extrémité axiale du membre allongé.
